# EUROPÄISCHE PATENTSCHRIFT

(11) **EP 3 040 297 B1**
(45) Veröffentlichungstag und Bekanntmachung des Hinweises auf die Patenterteilung: **04.03.2020**
(21) Anmeldenummer: 15199921.6
(22) Anmeldetag: 14.12.2015
(51) Int. Cl.: B65G 54/02, A22C 17/00

(54) **VORRICHTUNG ZUM BEWEGEN VON OBJEKTEN**
DEVICE FOR MOVING OBJECTS
DISPOSITIF DESTINE A DEPLACER DES OBJETS

(30) Priorität: 22.12.2014 DE 102014119350
(43) Veröffentlichungstag der Anmeldung: 06.07.2016
(73) Patentinhaber: Weber Maschinenbau GmbH Breidenbach, 35236 Breidenbach (DE)
(72) Erfinder: BURK, Alexander, 35232 Dautphetal (DE); ECKHARDT, Christoph, 35236 Breidenbach (DE); GERLACH, Jochen, 35232 Dautphetal (DE); NICHAU, Marco, 57334 Bad Laasphe (DE); NISPEL, Thomas, 35232 Dautphetal (DE); ROTHER, Ingo, 35236 Breidenbach (DE); VON KEUDELL, Leopold, 88682 Salem (DE); ZECHER, Steffen, 35460 Staufenberg (DE)
(74) Vertreter: Manitz Finsterwald Patent- und Rechtsanwaltspartnerschaft mbB

(56) Entgegenhaltungen:
- EP-A- 0 258 809
- EP-A1- 0 359 443
- EP-A1- 0 517 342
- EP-A1- 1 314 660
- EP-A1- 2 573 013
- WO-A1-2010/085670
- WO-A2-2016/023869
- AT-B- 326 038
- DE-A1-102011 111 548
- DE-U- 7 034 445
- JP-A- H03 293 222
- US-B2- 8 701 866

## Beschreibung

Die Erfindung betrifft ein System mit einer Vorrichtung zum Bewegen von Objekten sowie einen Transportmover für eine derartige Vorrichtung.

Derartige Systeme werden, z.B. in der Lebensmittelindustrie, eingesetzt, um Objekte, wie z.B. Wurst- oder Käsescheibenstapel, zwischen verschiedenen Be- und Verarbeitungsstationen zu transportieren. Dabei stellt die Übergabe des Objekts von der Verarbeitungsstation an den Transportmover oder von dem Transportmover an eine weitere Verarbeitungsstation eine besondere Herausforderung dar. Denn häufig sind die Objekte mechanisch empfindlich, haften an einer Auflagefläche aufgrund ihrer fettigen Oberfläche und sind mechanisch nachgiebig, so dass eine Handhabung erschwert wird. Daher muss zur Handhabung häufig auf eine technisch aufwendige Lösung, z.B. unter Verwendung eines Roboters, zurückgegriffen werden, um die Objekte behutsam und dennoch mit ausreichender Geschwindigkeit zwischen einer Verarbeitungsstation und einem Transportmover zu übergeben. Dies gilt insbesondere, aber nicht nur, bei der Übergabe von dem Transportmover an eine weitere Verarbeitungsstation, also für den Vorgang der Abgabe des Objekts von dem Transportmover.

Die WO 2016/023869 A2 (Dokument gemäß Artikel 54(3) EPÜ) zeigt ein System mit fahrerlosen Transportfahrzeugen, die jeweils einen eigenen Antrieb aufweisen und die jeweils mit flexiblen Bürsten versehen sein können, die von einem unter ein transportiertes Objekt greifenden Bandförderer elastisch verformt werden können. Die WO 2010/0085670 offenbart den Oberbegriff des Anspruchs 1.

Es ist die Aufgabe der Erfindung, bei einem System mit einer Vorrichtung zum Bewegen von Objekten der eingangs genannten Art die Übergabe von Objekten von dem oder an den Transportmover zu vereinfachen.

Diese Aufgabe wird durch ein System mit den Merkmalen des Anspruchs 1 und ein Verfahren mit den Merkmalen des Anspruchs 8 gelöst.

Ein Vorteil der Erfindung besteht darin, dass ein Handhabungsorgan, wie z.B. eine Schaufel oder ein Greifer, das Objekt nicht von einer starren Unterlage ablösen muss. Stattdessen kann das Handhabungsorgan die Unterlage selbst derart verformen, dass das Handhabungsorgan unter das Objekt greifen kann, ohne das Objekt selbst zuvor verformen oder verschieben zu müssen.

Mit anderen Worten kann das Handhabungsorgan die Unterlage verdrängen, ohne das Objekt übermäßig mechanisch zu belasten.

Ein weiterer Vorteil der Erfindung besteht darin, dass das Handhabungsorgan keine komplexen Bewegungen, wie z.B. geführt durch einen Roboter, vollführen muss, um das Objekt von dem Transportmover abzunehmen. Stattdessen reicht bereits eine Relativbewegung zwischen Handhabungsorgan und Transportmover in einer Richtung aus, damit das Handhabungsorgan die Unterlage verdrängen und unter das Objekt greifen kann.

Des Weiteren ist von Vorteil, dass das Objekt von jeder Richtung kommend untergriffen werden kann. Unter anderem bietet dies z.B. Möglichkeiten zur Korrektur der Objektlage sowie zur entsprechend ausgerichteten Objektübergabe für nachfolgende Handhabungsschritte.

Der Begriff "nicht-starr" umfasst auch die Bedeutung der Begriffe verformbar, deformierbar und/oder elastisch. Insbesondere ist die Unterlage derart flexibel, nachgiebig, elastisch, verdrängbar und/oder komprimierbar bzw. allgemein ausgedrückt verformbar und/oder deformierbar ausgebildet, dass von mehreren ein aufliegendes Objekt gemeinsam stützenden Stützbereichen der Unterlage zumindest ein Stützbereich unter Aufrechterhaltung der Stützwirkung durch die anderen Stützbereiche von dem Objekt bewegbar ist, oder dass mehrere ein aufliegendes Objekt zunächst noch gemeinsam bzw. ein aufzulegendes Objekt noch gar nicht stützende Stützbereiche der Unterlage nacheinander außer bzw. in Stützeingriff mit dem Objekt gebracht werden können, und zwar mittels einer Abnahmeeinrichtung bzw. einer Auflegeeinrichtung.

Mit anderen Worten ist die Unterlage zumindest bereichsweise mittels einer Einrichtung zum Abnehmen eines Objekts von dem Träger und/oder mittels einer Einrichtung zum Auflegen eines Objekts auf den Träger verformbar. Die Unterlage kann auch durch das Objekt selbst verformbar sein.

Der Träger kann als Verpackung oder als Teil einer Verpackung, z.B. als sogenannter Tray einer Verpackung, ausgebildet sein oder zumindest einen Teil einer Verpackung, z.B. einen Tray, umfassen. Alternativ kann der Träger auch einen Tray aufnehmen oder Portionen unmittelbar, d.h. ohne Tray, aufnehmen. Der Antrieb für die Transportmover ist als Linearmotor ausgebildet, insbesondere als linearer Synchronmotor oder als linearer Induktionsmotor.

Derartige Linearmotoren sind im Zusammenhang mit einer Vielzahl von Anwendungen grundsätzlich bekannt. Von Vorteil ist ein derartiges Antriebsprinzip unter anderem dann, wenn vergleichsweise geringe Lasten zu transportieren sind, wie es in dem hier in Rede stehenden Bereich des Transports von Lebensmittelportionen der Fall ist.

Ein für die Erfindung grundsätzlich verwendbares Transportsystem, auf das hiermit im Hinblick auf das Erfordernis der Ausführbarkeit der Erfindung ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Per-manentmagneten versehene Transportmover von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Das Bahnsystem bzw. die einzelnen Bahnen eines solchen Transportsystems können in eine Vielzahl aufeinanderfolgender Bahnelemente unterteilt werden, die gewissermaßen jeweils einen Einzel-Linearmotor bilden und von einer Steuereinrichtung individuell ansteuerbar sind. Wenn gleichzeitig die im Bahnsystem befindlichen Transportmover mittels der Steuereinrichtung identifizierbar sind, dann können auf diese Weise grundsätzlich beliebig viele Transportmover gleichzeitig in einem grundsätzlich beliebig komplexen Bahnsystem betrieben und dabei individuell bewegt werden.

Für die Identifizierung bzw. Lokalisierung der einzelnen Transportmover im Bahnsystem verwendet die vorstehend erwähnte Firma MagneMotion Inc. eine Technik, bei der jeder Transportmover mit einem Transducer versehen ist, der in den vom Bahnsystem gebildeten Stator ein Signal induziert, wodurch es der Steuereinrichtung ermöglicht wird, die exakte Position des Transportmovers mit einer von der Größe des Gesamtsystems abhängigen Genauigkeit von Bruchteilen eines Millimeters oder Bruchteilen eines Zentimeters zu bestimmen. Ein Vorteil dieses Systems besteht darin, dass keine externen Sensoren benötigt werden. Bei dem Steuersystem der Firma MagneMotion Inc. ist außerdem durch eine Unterteilung der Bahnen in eine Vielzahl von - gewissermaßen jeweils einen Einzel-Linearmotor darstellenden - Bahnelementen sichergestellt, dass keine Kollisionen zwischen aufeinanderfolgenden Transportmovern auftreten. So kann ein Transportmover nur dann in das nächste Bahnelement einfahren, wenn dies von der Steuereinrichtung gestattet wird, was insbesondere dann nicht der Fall ist, wenn sich ein anderer Transportmover in dem Bahnelement befindet.

Vor dem Hintergrund dieses grundsätzlich bekannten Transportsystems ist bei der Erfindung in einem möglichen Ausführungsbeispiel vorgesehen, dass das Bahnsystem als Stator des Linearmotors ausgebildet ist.

Insbesondere ist der Läufer jeweils ein Bestandteil eines linearen Synchronmotors, wobei insbesondere der Läufer zumindest einen Permanentmagneten umfasst und das Bahnsystem als Motorstator ausgebildet ist.

Vorzugsweise ist das Bahnsystem in eine Vielzahl von, insbesondere jeweils einen Einzel-Linearmotor darstellenden, Bahnelementen unterteilt, die von der Steuereinrichtung individuell ansteuerbar sind.

Die Transportmover sind vorzugsweise von der Steuereinrichtung identifizierbar.

Des Weiteren sind die Transportmover vorzugsweise von der Steuereinrichtung im Bahnsystem lokalisierbar.

Das Transportsystem weist eine Mehrzahl von Transportmovern auf, deren Gesamtanzahl von der jeweiligen Anwendung abhängig ist. Es kann vorgesehen sein, dass das Bahnsystem mehrere Dutzende bis einige Hundert Transportmover umfasst, d.h. es kann gewissermaßen ein regelrechter "Schwarm" von Transportmovern im Bahnsystem vorhanden sein, um eine Vielzahl von Portionen zu transportieren und gegebenenfalls Zusatzfunktionen durchzuführen wie z.B. eine Pufferung, ein Verteilen und/oder ein Zuordnen von Portionen.

Im Rahmen der Erfindung kann ein zu bewegendes Objekt z.B. ein Produkt, ein Lebensmittelprodukt und/oder einen Stapel oder - allgemein - eine Portion aus z.B. Wurst- oder Käsescheiben umfassen. Auch kann ein Objekt ein Tray, eine Folie, eine Platte, ein Behältnis und/oder einen Schlauchbeutel, jeweils insbesondere zur Aufnahme eines Lebensmittelproduktes, umfassen.

Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel- oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsorten-Portion erzeugt werden kann und nach deren Verpackung somit eine Mehrsorten-Packung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke wie beispielsweise Frischfleischstücke handeln.

Mit anderen Worten handelt es sich bei Anwendungen im Lebensmittelbereich im Rahmen der Erfindung bei einer Portion um die im Hinblick auf die Transportaufgabe kleinste Einheit, die einerseits über eine bestimmte Strecke transportiert werden muss und die gegebenenfalls - je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Bahnsystem sowie eine oder mehrere Verpackungsvorrichtungen umfasst, zu erfüllen, beispielsweise hinsichtlich der Bildung von Formaten, wie sie für die jeweils vorgesehene Verpackungsvorrichtung bereitgestellt werden müssen.

Ein Transportmover kann eine oder mehrere Portionen transportieren. Alternativ ist es auch möglich, dass mehrere, insbesondere zwei, Transportmover gemeinsam eine Portion transportieren. Die Transportmover können dabei gewissermaßen gemeinsam auf dem Bahnsystem als Einheit bewegt werden. Auf diese Weise können auch größere Lasten, insbesondere schwerere und/oder flächenmäßig größere Portionen, auf dem Bahnsystem bewegt werden, als mit nur einem Transportmover.

Bei einer möglichen Ausführungsform umfasst die Unterlage eine Vielzahl von einzelnen Stützelementen. Die Stützelemente können unabhängig voneinander verformbar sein. Die Stützelemente können jeweils stiftförmig, zylindrisch, pilzförmig, kegelförmig oder lamellenartig ausgebildet sein. Die Stützelemente können wie Borsten oder Halme von einer Basis abstehen. Die Stützelemente können gewissermaßen einen Teppich von Stützelementen bilden.

Insbesondere ist die Anzahl von Stützelementen pro Quadratzentimeter größer oder gleich 1, insbesondere größer oder gleich 4, bevorzugt größer oder gleich 10. Einzelne Stützelemente lassen sich einzeln deformieren oder verdrängen. Das bedeutet, dass die restlichen, noch nicht verformten, Stützelemente ihre Form, und insbesondere ihre Höhe, beibehalten. Dadurch bleibt das Objekt zunächst an seinem Ort, weil es von den restlichen Stützelementen solange getragen wird, bis eine größere Zahl von Stützelementen verdrängt wurde. Das Objekt erfährt hierbei keine oder allenfalls nur eine geringe mechanische Beeinträchtigung.

Insbesondere liegt die von den Stützelementen jeweils bereitgestellte wirksame Stützfläche für das Objekt etwa im Bereich von 1 mm² bis 10 mm² und ist insbesondere kleiner als 5 mm², insbesondere kleiner als 3 mm².

Bei einer Ausführungsform weist die Unterlage wenigstens einen mit einem Fluid und/oder mit einem verformbaren Material gefüllten und zumindest bereichsweise von einer flexiblen Hülle gebildeten Hohlraum auf. Dabei kann ein komprimierbares Fluid und/oder ein nicht komprimierbares Fluid verwendet werden.

Bei einer Ausführungsform umfasst die Unterlage ein flexibles, nachgiebiges, elastisches, verdrängbares und/oder komprimierbares Material. Oder es besteht die Unterlage aus einem derartigen Material. Das Material kann z.B. ein Elastomer, insbesondere ein Silikonelastomer, oder ein Schaumstoff sein.

Bei einer Ausführungsform ist in der Unterlage ein Bett für das Objekt formbar, insbesondere durch Auflegen und/oder Eindrücken des Objekts. Dadurch lässt sich die Unterlage an das Objekt anpassen. Das Bett ist insbesondere eine z.B. muldenartige Vertiefung, in die das Objekt aufgenommen und durch die das Objekt festgehalten und/oder fixiert wird. Dadurch wird ein sicherer Halt des Objekts, insbesondere während einer Kurvenfahrt des Transportmovers, gewährleistet.

Bei einer Ausführungsform geht mit dem Formen des Bettes eine Materialverdrängung einher, durch die wenigstens ein Verdrängungsabschnitt entsteht, der ein in dem Bett liegendes Objekt zumindest bereichsweise, insbesondere erhöht, umgibt.

Bei einer Ausführungsform ist die Materialverdrängung mittels einer Freigabeeinrichtung zumindest zum Teil begrenzbar oder rückgängig machbar. Dazu kann die Freigabeeinrichtung den Verdrängungsabschnitt und/oder die Unterlage, insbesondere mechanisch mit einer Kraft, beaufschlagen, um die Unterlage in ihre Ausgangsform oder eine andere Form zu verformen.

Das Beaufschlagen kann z.B. durch eine mechanische Einwirkung eines starren Körpers oder durch Erhöhen des Drucks eines in der Unterlage befindlichen Fluids durchgeführt werden.

Wenn davon ausgegangen wird, dass die Ausgangsform der Oberseite der Unterlage zumindest im Wesentlichen eben ist, wird die Oberseite der Unterlage somit wieder eben. Das Bett verschwindet also. Dadurch wird das Objekt wieder freigegeben und nicht länger durch den Verdrängungsabschnitt festgehalten oder fixiert. Wie z.B. bei einem Wasserbett kann das Objekt durch Beaufschlagen der Unterlage beeinflusst werden, ohne das Objekt selbst beispielsweise durch ein Handhabungsorgan zu manipulieren. Das Objekt kann mit anderen Worten einfach durch Druck an einer vom Objekt beabstandeten Stelle an der Unterlage aus seinem Bett gehoben oder sogar - gemäß einer weiteren Ausführungsform - aus diesem "herauskatapultiert" werden, während das Bett dabei verschwindet. Eine solche Art und Weise der Freigabe ist insbesondere im Bereich der Lebensmitteltechnologie bzw. des Lebensmittelmaschinenbaus unter Hygienegesichtspunkten von Vorteil, da die Objekte zum Freigeben nicht unmittelbar berührt zu werden brauchen.

Bei einer Ausführungsform ist mittels einer Freigabeeinrichtung die Unterlage in eine Freigabekonfiguration zum Abnehmen eines Objekts formbar. Insbesondere kann die Freigabeeinrichtung über den unbelasteten Normalzustand der Unterlage hinaus, insbesondere durch Zusammendrücken der Unterlage, das Objekt gewissermaßen auf eine z.B. konvexe Erhöhung anheben, d.h. gewissermaßen eine Kuppe oder einen Berg bilden, über die bzw. den das zuvor noch eingebettete Objekt seitlich vorsteht und so einfach zum Abnehmen durch ein Handhabungsorgan erfasst werden kann.

Bei einer Ausführungsform umfasst die Unterlage eine Mehrzahl von Stützbereichen für das Objekt, wobei sich zumindest zwei Stützbereiche hinsichtlich ihrer Stützeigenschaften für das Objekt voneinander unterscheiden. Dadurch kann die Unterlage besser an bestimmte Objekte angepasst werden. Insbesondere können dadurch bestimmte Bereiche der Unterseite des Objekts durch einen weicheren Stützbereich geschont werden, während ein robusterer Bereich der Unterseite des Objekts von einem härteren Stützbereich getragen werden kann.

Bei einer Ausführungsform ist die Unterlage lösbar an dem Träger befestigt. Dies erlaubt nicht nur eine höhere Flexibilität bei der Montage und Umrüstung der Vorrichtung. Die Unterlage lässt sich im gelösten Zustand auch einfacher z.B. durch eine Spülmaschine oder auf andere Art und Weise reinigen. Eine einfache und effektive Reinigbarkeit ist insbesondere in der Lebensmittelindustrie notwendig.

Die Erfindung betrifft weiterhin ein Verfahren zum Übergeben von Objekten in einem erfindungsgemäßen System von einem oder an einen Transportmover des Systems mittels eines Handhabungsorgans, insbesondere einer Schaufel oder eines Greifers, einer Übergabeeinrichtung, bei dem das Handhabungsorgan die nicht-starre Unterlage des Trägers des Transportmovers verformt und unter das Objekt oder das Zwischenelement greift.

Vorzugsweise wird bei dem erfindungsgemäßen Verfahren das Handhabungsorgan relativ zu dem Transportmover in einer Richtung bewegt, wobei die Unterlage verdrängt wird und unter das Objekt greift.
Bevorzugt wird bei dem erfindungsgemäßen Verfahren mittels einer Freigabeeinrichtung die Unterlage in eine Freigabekonfiguration zum Abnehmen des Objektes geformt.
Weitere Ausführungsformen sind in den abhängigen Ansprüchen, der Beschreibung und den Figuren gezeigt.
Die Erfindung wird nachfolgend lediglich beispielhaft unter Bezugnahme auf die schematische Zeichnung erläutert.
- Fig. 1: zeigt einen Transportmover mit einer Unterlage, die mehrere stiftförmige Stützelemente aufweist.
- Fig. 2: zeigt eine Unterlage für ein Objekt, die als einzelner mit einem Fluid gefüllter Körper ausgeführt ist.
- Fig. 3: zeigt eine Unterlage für ein Objekt, die als einzelner Körper ausgeführt ist.
- Fig. 4: zeigt eine Unterlage für ein Objekt, welches auf einem starren Zwischenelement aufliegt.
- Fig. 5: zeigt eine Unterlage für ein Objekt, die lösbar an einem Träger befestigt ist.
- Fig. 6: zeigt eine Unterlage für ein Objekt, die ein Bett für das Objekt bildet.
- Fig. 7: zeigt die Unterlage der Fig. 6 nach einer mechanischen Beaufschlagung in einer Freigabekonfiguration.

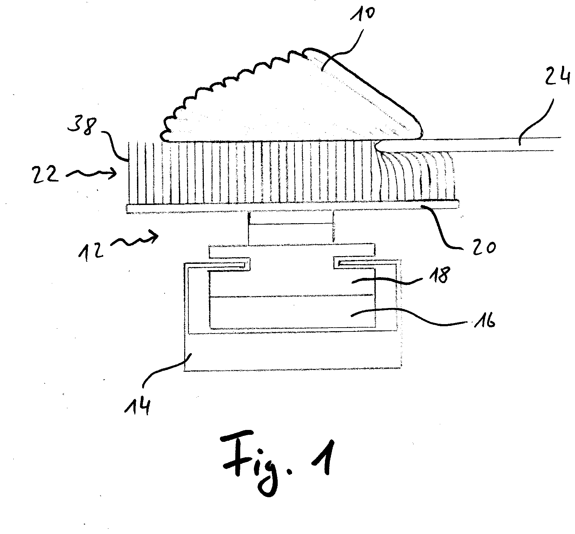

Fig. 1 zeigt einen Transportmover 12 eines Bahnsystems 14. Der Transportmover 12 wird über einen Magneten 16, der an einem Läufer 18 des Transportmovers 12 angeordnet ist, mittels veränderlicher Magnetfelder durch das Bahnsystem 14 bewegt. Dabei folgt der Transportmover 12 einer Bewegungsbahn, die senkrecht zur Bildebene der Fig. 1 verläuft. In Fig. 1 ist also das Bahnsystem 14 geschnitten dargestellt. Der Transportmover 12 umfasst einen Träger 20, der auf dem Läufer 18 angeordnet ist. Der Träger 20 weist an seiner Oberseite eine Unterlage 22 auf, auf der ein Objekt 10 aufliegt. Das Objekt 10 ist hier ein Stapel von Wurstscheiben ohne Verpackung. Die unterste Wurstscheibe des Objekts 10 liegt somit unmittelbar auf der Unterlage 22 auf.

Die Unterlage 22 der Fig. 1 ist als eine Art Teppich von stiftförmigen elastischen Körpern ausgeführt, die sich jeweils von dem Träger 20 senkrecht nach oben erstrecken. Dabei sind die Stifte 38 der Unterlage 22 derart steif, dass sie gemeinsam das Objekt 10 abstützen können. Die Stifte 38 der Unterlage 22 sind z.B. aufgrund ihrer Form und/oder ihrer Materialzusammensetzung verhältnismäßig widerstandsfähig gegenüber einer Belastung in vertikaler Richtung, wie sie das Objekt 10 ausübt. Dagegen leisten die Stifte 38 nur geringen Widerstand gegenüber einer Krafteinwirkung quer zu ihrer Erstreckungsrichtung.

Fig. 1 ist insbesondere insofern rein beispielhaft bzw. schematisch zu verstehen, als die Dicke der einzelnen Stifte 38 und/oder deren Dichte von der Darstellung in Fig. 1 abweichen kann. Diese Parameter können insbesondere in Abhängigkeit von den Eigenschaften der jeweiligen Objekte 10 gewählt werden.

In Fig. 1 ist ferner ein Handhabungsorgan 24 gezeigt, das im Begriff ist, das Objekt 10 von dem Träger 20 bzw. von seiner Unterlage 22 abzunehmen. Dazu schiebt sich das Handhabungsorgan 24 von rechts in horizontaler Richtung unter das Objekt 10. Dabei verdrängt das Handhabungsorgan 24 die Stifte 38 der Unterlage 22, die ihm in den Weg kommen. Die Stifte 38 werden durch das Handhabungsorgan 24 einfach mit geringem Kraftaufwand umgebogen. Diejenigen Stifte 38, die noch nicht von dem Handhabungsorgan 24 umgebogen wurden, tragen das Objekt 10. Das Handhabungsorgan 24 kann also unter das Objekt 10 greifen, ohne das Objekt 10 dafür zunächst von einer Fläche anheben zu müssen. Dabei ist das Handhabungsorgan 24 insbesondere als Gabel oder Rechen mit Zinken ausgeführt, so dass zwischen den Zinken eine Anzahl an Stiften 38 stehen bleiben und das Objekt 10 tragen kann. Dadurch kann eine Reibung zwischen dem Objekt 10 und dem Handhabungsorgan 24 bei einer horizontalen Relativbewegung der beiden vermieden werden. Denn die Gabel wird insbesondere erst dann angehoben, wenn sie mit einer ausreichenden horizontalen Länge unter das Objekt 10 gelangt ist.

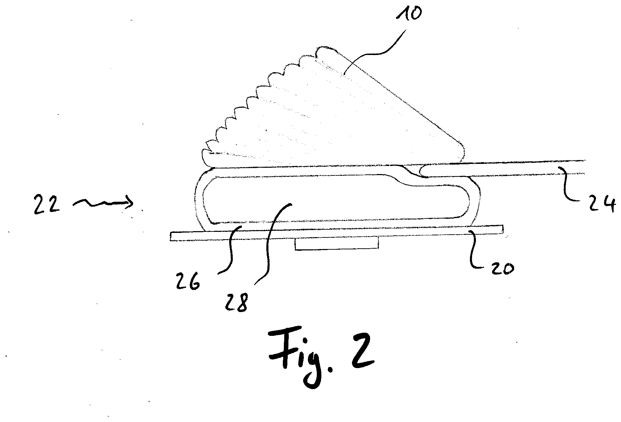

Fig. 2 zeigt eine Unterlage 22 eines Trägers 20 für das Objekt 10, die aus einer mit einem Fluid 28 gefüllten Hülle 26 aufgebaut ist. Die Unterlage 22 ist somit gewissermaßen wie ein Wasserbett oder wie ein Ballon aufgebaut. Alternativ kann als Füllung der Hülle 26 auch ein Festkörpermaterial vorgesehen sein, das ausreichend verformbar ist. Auf der Unterlage 22 liegt das Objekt 10 auf, welches durch das Handhabungsorgan 24 abgehoben wird. Dazu bewegt sich das Handhabungsorgan 24 horizontal nach links und schiebt sich unter das Objekt 10, wobei das Handhabungsorgan 24 die Unterlage 22 verdrängt.

Die Hülle 26 kann z.B. zugelastisch oder aber auch zugsteif ausgeführt sein, wobei die Hülle bezogen auf ihre Flächenausdehnung biegsam ist. Die Hülle 26 kann ferner an ihrer dem Objekt zugewandten Seite eine Mehrzahl an Erhebungen und/oder Vertiefungen, insbesondere Noppen, aufweisen. Dadurch kann eine Haftwirkung des Objekts 10, z.B. aufgrund einer fettigen Oberfläche des Objekts 10, verringert und das Objekt 10 noch einfacher abgehoben werden. Das Fluid 28 kann ein komprimierbares Fluid, wie z.B. Luft, und/oder ein nicht komprimierbares Fluid, wie z.B. Wasser oder Öl, umfassen.

Dadurch, dass die Unterlage 22 eine durchgehende obere Oberfläche bildet, lässt sich die Unterlage 22 gut, insbesondere durch eine mechanische Reinigungseinrichtung wie z.B. eine Bürste, reinigen.

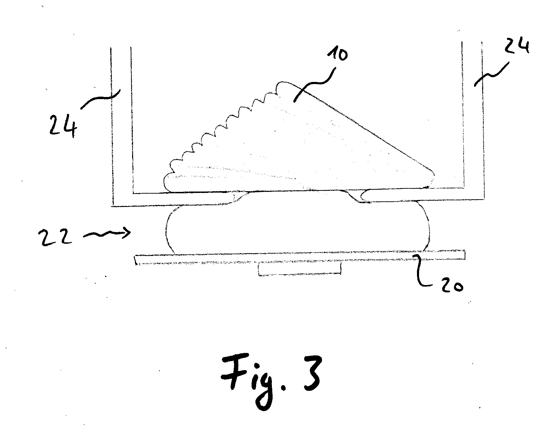

Fig. 3 zeigt eine Unterlage 22 eines Trägers 20 für ein Objekt 10, die als ein Körper eines elastischen Materials, z.B. eines Silikonelastomers, ausgeführt ist. Dieses Material kann zusätzlich von einer Hülle umgeben sein, wobei dies aber nicht zwingend ist. Der Körper kann ein Vollmaterial umfassen, wobei auch dies nicht zwingend ist. Der Körper kann z.B. Hohlräume enthalten.

Gemäß Fig. 3 ist das Objekt 10 im Begriff von zwei Handhabungsorganen 24 abgenommen zu werden, welche sich horizontal aufeinander zu bewegen. Dabei greifen die Handhabungsorgane 24 unter das Objekt 10, wobei sie jeweils die Unterlage 22 verformen und verdrängen, so dass sie unter das Objekt 10 gelangen können, ohne das Objekt 10 zuvor zumindest teilweise anzuheben. Dabei können die Handhabungsorgane 24 die Unterlage 22 auch derart verformen, insbesondere komprimieren, dass sich die Unterlage 22 in einem noch nicht verdrängten Bereich, hier im Mittelbereich, nach oben wölbt. Dadurch wird das Objekt 10 leicht angehoben, was das Untergreifen des Objekts 10 weiter vereinfacht.

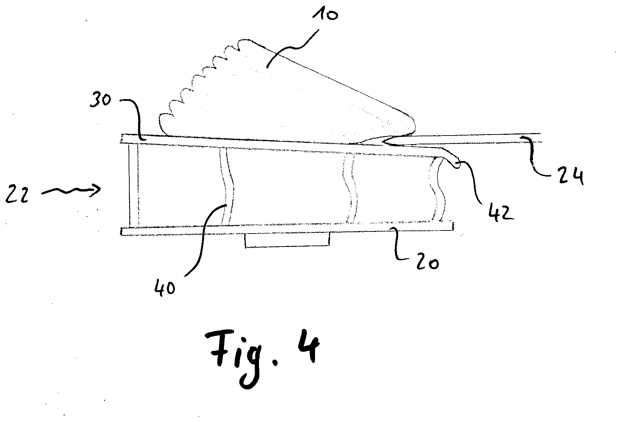

Fig. 4 zeigt ein Objekt 10, welches auf einer starren Platte 30 einer Unterlage 22 aufliegt. Die Unterlage 22 stützt die Platte 30 gegenüber dem Träger 20 mittels einer Mehrzahl von jeweils beispielsweise als Zylinder, Säulen, Lamellen oder Pfeiler ausgebildeten Stützelementen 40 ab. Die Stützelemente 40 sind in ihren elastischen Eigenschaften derart dimensioniert, dass das Eigengewicht des Objekts 10 die Platte 30 nicht über Gebühr aus ihrer waagerechten Grundposition heraus verschiebt oder verkippt.

In Fig. 4 ist ferner ein Handhabungsorgan 24 gezeigt, das sich relativ zu dem Träger 20 horizontal nach links unter das Objekt 10 schiebt, wobei das Handhabungsorgan 24 die Platte 30 durch eine nach unten gerichtete Kraft am Berührpunkt zwischen Platte 30 und Handhabungsorgan 24 kippt. Dabei werden die Stützelemente 40 der Unterlage 22 gestaucht. Das Kippen der Platte 30 kann durch ein Zusammenwirken der Spitze des Handhabungsorgans 24 mit einer Rampe 42 der Platte 30 eingeleitet werden. Daher reicht eine einfach zu realisierende horizontale Relativbewegung zwischen dem Handhabungsorgan 24 und dem Träger 20 aus, um das Handhabungsorgan 24 unter das Objekt 10 zu schieben und dieses abzuheben.

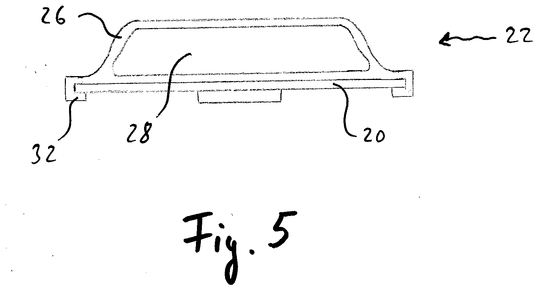

Fig. 5 zeigt eine Unterlage 22 für ein nicht dargestelltes Objekt 10, welche an einem Träger 20 lösbar befestigt ist. Die Unterlage 22 umfasst eine flexible Hülle 26, die mit einem Fluid 28 gefüllt ist. Alternativ kann als Füllung der Hülle 26 auch ein Festkörpermaterial vorgesehen sein, das ausreichend verformbar ist. Alternativ kann eine mehrlagige Hülle 26 mit unterschiedlichen Elastizitätseigenschaften der Einzellagen und/oder ein Formkörper mit lokal unterschiedlichen Materialeigenschaften, beispielweise mit einem relativ weichen Kern innerhalb einer relativ harten Schale oder Ummantelung, vorgesehen sein.

An ihren seitlichen Rändern weist die Unterlage 22 Hinterschnittelemente 32 auf, die den Träger 20 hintergreifen, um die Unterlage 22 an dem Träger 20 zu befestigen. Die Hinterschnittelemente 32 sind derart elastisch ausgeführt, dass die Unterlage 22 von dem Träger 20 abgelöst werden kann. Die Hinterschnittelemente 32 bilden mit dem jeweiligen Gegenstück des Trägers 20 eine einfach zu fügende und zu lösende Schnappverbindung. So lässt sich die Unterlage 22 z.B. zwecks Reinigung oder Umrüstung der Vorrichtung einfach z.B. händisch lösen und austauschen.

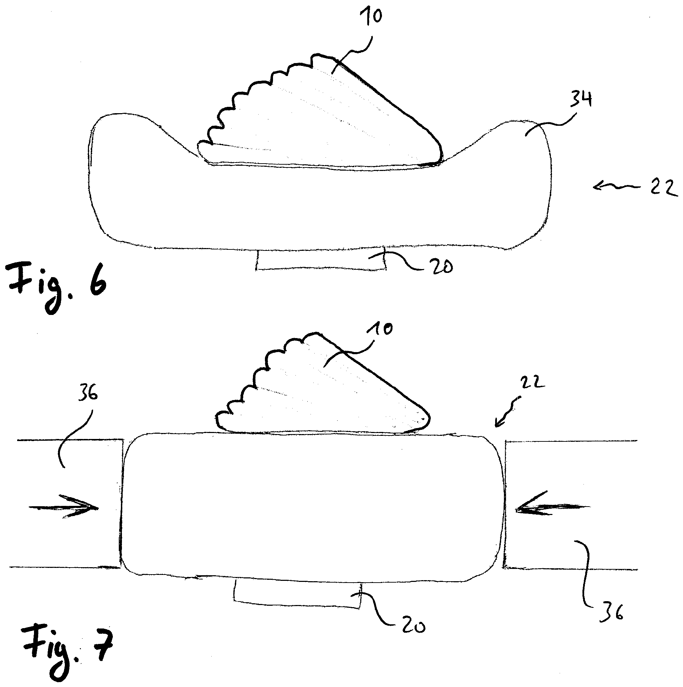

Fig. 6 und 7 zeigen wiederum ein Objekt 10, welches auf einer verformbaren Unterlage 22 unmittelbar aufliegt. Die Unterlage 22 stützt das Objekt 10 gegenüber dem Träger 20 ab. In Fig. 6 verformt das Objekt 10 durch sein Eigengewicht die Unterlage 22 derart, dass sich um das Objekt 10 herum ein oder mehrere Verdrängungsabschnitte 34 ausbilden. Die Verdrängungsabschnitte 34 sichern das Objekt 10 gegenüber einer Bewegung in horizontaler Richtung relativ zu dem Träger 20. Das Objekt 10 formt sich also sein eigenes Bett in der Unterlage 22, welches an die Form des Objekts 10 angepasst ist. Der Formungsvorgang kann z.B. durch zusätzliches Eindrücken des Objekts 10 in die Unterlage 22 verstärkt oder unterstützt werden. Die Verdrängungsabschnitte 34 bilden einen Rahmen, um das Objekt 10 aufzunehmen.

In Fig. 7 ist die Unterlage 22 der Fig. 6 gezeigt, nachdem sie durch Backen 36 einer Freigabeeinrichtung von zwei Seiten mit einer Kraft beaufschlagt wurde. Dadurch wurde das Objekt 10 aus seinem Bett gehoben, wobei das Bett verschwunden ist. Mit anderen Worten wurde durch die Backen 36 die Unterlage 22 derart verformt, dass sich die dem Objekt 10 zugewandte Oberfläche der Unterlage 22 nach oben wölbt, wobei die Verdrängungsabschnitte 34, welche das Objekt 10 in Fig. 6 horizontal sichern, verschwunden sind.

Die Unterlage 22 der Fig. 7 kann auch stärker als in Fig. 7 mit einer Kraft oder einem Druck beaufschlagt werden, so dass die dem Objekt 10 zugewandte Oberfläche der Unterlage 22 sich weiter, insbesondere konvex, nach oben wölbt, um ein Abgeben des Objekts 10 von dem Träger 20 weiter zu vereinfachen.

### Bezugszeichenliste

- 10: Objekt
- 12: Transportmover
- 14: Bahnsystem
- 16: Magnet
- 18: Läufer
- 20: Träger
- 22: Unterlage
- 24: Handhabungsorgan
- 26: Hülle
- 28: Fluid
- 30: Platte
- 32: Hinterschnittelement
- 34: Verdrängungsabschnitt
- 36: Backe
- 38: Stützelement, Stift
- 40: Stützelement
- 42: Rampe

## Patentansprüche

1. System mit
- einer Vorrichtung zum Bewegen von Objekten (10), insbesondere von jeweils wenigstens eine von einem Lebensmittelprodukt, insbesondere mittels einer Aufschneidevorrichtung, insbesondere eines Hochgeschwindigkeitsslicers, abgetrennte Scheibe umfassenden Portionen, mit einer Mehrzahl individuell bewegbarer Transportmover (12) für jeweils wenigstens ein Objekt (10),
mit einem Bahnsystem (14) für die Transportmover (12), in welchem die Transportmover (12) entlang wenigstens einer vorgegebenen Bahn in einer Transportrichtung bewegbar sind, und
mit einer Steuereinrichtung zum Steuern der Bewegungen der Transportmover (12) in dem Bahnsystem (14),
wobei ein Antrieb für den Transportmover (12) als Linearmotor ausgebildet ist,
wobei die Transportmover (12) jeweils zumindest einen mit dem Bahnsystem (14) zusammenwirkenden Läufer (18) und wenigstens einen am Läufer angebrachten Träger (20) für zumindest ein Objekt (10) umfassen,
**dadurch gekennzeichnet, dass** zumindest ein Träger (20) eine nicht-starre Unterlage (22) für das Objekt (10) aufweist oder als eine nicht-starre Unterlage (22) für das Objekt (10) ausgebildet ist, und
wobei das Objekt (10) während des Transports auf der Unterlage (22) entweder unmittelbar aufliegt oder mittelbar über ein, insbesondere starres, Zwischenelement aufliegt, und
- einer Einrichtung zum Übergeben von Objekten von dem oder an den Transportmover (12) mit einem Handhabungsorgan (24),
wobei das Handhabungsorgan (24) und die nicht-starre Unterlage (22) derart ausgebildet sind, dass das Handhabungsorgan (24) die nicht-starre Unterlage (22) verformen und unter das Objekt (10) oder das Zwischenelement greifen kann.

2. System nach Anspruch 1,
**dadurch gekennzeichnet, dass**
die Unterlage (22) eine Vielzahl von einzelnen, insbesondere unabhängig voneinander verformbaren, Stützelementen (38, 40) umfasst, wobei insbesondere die Stützelemente (38) jeweils stiftförmig, zylindrisch, pilzförmig, kegelförmig oder lamellenartig ausgebildet sind.

3. System nach Anspruch 1 oder 2,
**dadurch gekennzeichnet, dass**
die Unterlage (22) wenigstens einen mit einem Fluid (28) und/oder mit einem verformbaren Material gefüllten und zumindest bereichsweise von einer flexiblen Hülle (26) gebildeten Hohlraum aufweist.

4. System nach einem der vorhergehenden Ansprüche,
**dadurch gekennzeichnet, dass**
die Unterlage (22) ein flexibles, nachgiebiges, elastisches, verdrängbares und/oder komprimierbares Material umfasst oder aus einem flexiblen, nachgiebigen, elastischen, verdrängbaren und/oder komprimierbaren Material besteht, wobei insbesondere das Material ein Elastomer oder ein Schaumstoff ist.

5. System nach einem der vorhergehenden Ansprüche,
**dadurch gekennzeichnet, dass**
mittels einer Freigabeeinrichtung (36) die Unterlage (22) in eine Freigabekonfiguration zum Abnehmen eines Objektes (10) formbar ist.

6. System nach einem der vorhergehenden Ansprüche,
**dadurch gekennzeichnet, dass**
die Unterlage (22) eine Mehrzahl von Stützbereichen für das Objekt (10) umfasst, wobei sich zumindest zwei Stützbereiche hinsichtlich ihrer Stützeigenschaften für das Objekt (10) voneinander unterscheiden.

7. System nach einem der vorhergehenden Ansprüche ,
**dadurch gekennzeichnet, dass**
die Unterlage (22) lösbar an dem Träger (20) befestigt ist.

8. Verfahren zum Übergeben von Objekten in einem System nach einem der vorhergehenden Ansprüche von einem oder an einen Transportmover (12) des Systems mittels eines Handhabungsorgans (24), insbesondere einer Schaufel oder eines Greifers, einer Übergabeeinrichtung,
bei dem das Handhabungsorgan (24) die nicht-starre Unterlage (22) des Trägers (20) des Transportmovers (12) verformt und unter das Objekt (10) oder das Zwischenelement greift.

9. Verfahren nach Anspruch 8, **dadurch gekennzeichnet, dass**
das Handhabungsorgan (24) relativ zu dem Transportmover (12) in einer Richtung bewegt wird und dabei die Unterlage (22) verdrängt und unter das Objekt (10) greift.

10. Verfahren nach Anspruch 8 oder 9, **dadurch gekennzeichnet, dass**
mittels einer Freigabeeinrichtung (36) die Unterlage (22) in eine Freigabekonfiguration zum Abnehmen des Objektes (10) geformt wird.

## Claims

1. A system having
- an apparatus for moving objects (10), in particular portions which each comprise at least one slice cut off from a food product, in particular by means of a slicing apparatus, in particular by means of a high-speed slicer, having a plurality of individually movable transport movers (12) for a respective at least one object (10);
having a path system (14) for the transport movers (12) in which the transport movers (12) are movable in a transport direction along at least one predefined path; and
having a control device for controlling the movements of the transport movers (12) in the path system (14),
wherein a drive for the transport mover (12) is configured as a linear motor; wherein the transport movers (12) each comprise at least one rotor (18) cooperating with the path system (14) and at least one carrier (20), attached to the rotor, for at least one object (10),
**characterized in that** at least one carrier (20) has a non-rigid support (22) for the object (10) or is configured as a non-rigid support (22) for the object (10); and
wherein the object (10) either lies on the support (22) directly or indirectly via an intermediate element, in particular a rigid intermediate element, during the transport; and
- said system having a device for transferring objects from or to the transport mover (12), which device comprises a handling member (24), wherein the handling member (24) and the non-rigid support (22) are configured such that the handling member (24) can deform the non-rigid support (22) and can engage beneath the object (10) or the intermediate element.

2. A system in accordance with claim 1,
**characterized in that**
the support (22) comprises a plurality of individual support elements (38, 40) which are in particular deformable independently of one another, with in particular the support elements (38) respectively being pin-shaped, cylindrical, mushroom-shaped, conical or lamellar.

3. A system in accordance with claim 1 or claim 2,
**characterized in that**
the support (22) has at least one hollow space which is filled with a fluid (28) and/or with a deformable material and which is at least regionally formed by a flexible sleeve (26).

4. A system in accordance with any one of the preceding claims,
**characterized in that**
the support (22) comprises a flexible, yielding, elastic, displaceable and/or compressible material or consists of a flexible, yielding, elastic, displaceable and/or compressible material, with in particular the material being an elastomer or a foam.

5. A system in accordance with any one of the preceding claims,
**characterized in that**
the support (22) can be formed into a release configuration for removing an object (10) by means of a release device (36).

6. A system in accordance with any one of the preceding claims,
**characterized in that**
the support (22) comprises a plurality of support regions for the object (10), with at least two support regions differing from one another with respect to their support properties for the object (10).

7. A system in accordance with any one of the preceding claims,
**characterized in that**
the support (22) is releasably fastened to the carrier (20).

8. A method of transferring objects in a system in accordance with any one of the preceding claims from or to a transport mover (12) of the system by means of a handling member (24), in particular a claw or a gripper, of a transfer device,
in which the handling member (24) deforms the non-rigid support (22) of the carrier (20) of the transport mover (12) and engages beneath the object (10) or the intermediate element.

9. A method in accordance with claim 8,
**characterized in that**
the handling member (24) is moved relative to the transport mover (12) in one direction and in so doing displaces the support (22) and engages beneath the object (10).

10. A method in accordance with claim 8 or claim 9,
**characterized in that**
the support (22) is formed into a release configuration for removing the object (10) by means of a release device (36).

## Revendications

1. Système comportant
- un dispositif pour déplacer des objets (10), en particulier des portions comprenant chacune au moins une tranche séparée d'un produit alimentaire, en particulier à l'aide d'un dispositif de coupe, en particulier à l'aide d'une trancheuse à haute performance, comportant une pluralité d'organes de transport (12) mobiles individuellement pour au moins un objet respectif (10),
un système de voie (14) pour les organes de transport (12), dans lequel les organes de transport (12) sont mobiles dans une direction de transport le long d'au moins une voie donnée, et
un moyen de commande pour commander les mouvements des organes de transport (12) dans le système de voie (14),
un entraînement pour l'organe de transport (12) étant réalisé sous forme de moteur linéaire,
les organes de transport (12) comprenant chacun au moins un curseur (18) coopérant avec le système de voie (14), et au moins un support (20) monté sur le curseur et destiné à au moins un objet (10),
**caractérisé en ce que**
au moins un support (20) comprend une base non rigide (22) pour l'objet ou est réalisé sous la forme d'une base non rigide (22) pour l'objet (10), et pendant le transport, l'objet (10) repose sur la base (22) soit directement soit indirectement par l'intermédiaire d'un élément intermédiaire en particulier rigide, et
- un moyen pour transférer des objets depuis ou vers l'organe de transport (12) avec un organe de manipulation (24),
l'organe de manipulation (24) et la base non rigide (22) étant réalisés de telle sorte que l'organe de manipulation (24) peut déformer la base non rigide (22) et s'engager au-dessous de l'objet (10) ou de l'élément intermédiaire.

2. Système selon la revendication 1,
**caractérisé en ce que**
la base (22) comprend une multitude d'éléments de soutien (38, 40) individuels, en particulier déformables indépendamment les uns des autres, les éléments de soutien (38) étant réalisés chacun en forme de tige, en forme cylindrique, en forme de champignon, en forme conique ou en forme de lamelle.

3. Système selon la revendication 1 ou 2,
**caractérisé en ce que**
la base (22) présente au moins une cavité remplie d'un fluide (28) et/ou d'un matériau déformable et formée au moins localement par une gaine flexible (26).

4. Système selon l'une des revendications précédentes,
**caractérisé en ce que**
la base (22) comprend un matériau flexible, souple, élastique, repoussable compressible ou est constituée en un matériau flexible, souple, élastique, repoussable compressible, le matériau étant en particulier un élastomère ou une mousse.

5. Système selon l'une des revendications précédentes,
**caractérisé en ce que**
à l'aide d'un dispositif de libération (36), la base (22) est déformable en une configuration de libération pour le retrait d'un objet (10).

6. Système selon l'une des revendications précédentes,
**caractérisé en ce que**
la base (22) comprend une pluralité de zones de soutien pour l'objet (10), au moins deux zones de soutien se distinguant l'une de l'autre quant à leurs propriétés de soutien pour l'objet (10).

7. Système selon l'une des revendications précédentes,
**caractérisé en ce que**
la base (22) est fixée de façon détachable au support (20).

8. Procédé pour transférer des objets dans un système selon l'une des revendications précédentes depuis ou vers un organe de transport (12) dudit système à l'aide d'un organe de manipulation (24), en particulier à l'aide d'une pelle ou d'un préhenseur, d'un dispositif de transfert,
dans lequel
l'organe de manipulation (24) déforme la base non rigide (22) du support (20) de l'organe de transport (12) et s'engage au-dessous de l'objet (10) ou de l'élément intermédiaire.

9. Procédé selon la revendication 8,
**caractérisé en ce que**
l'organe de manipulation (24) est déplacé par rapport à l'organe de transport (12) dans une direction, en repoussant la base (22) et s'engageant au-dessous de l'objet (10).

10. Procédé selon la revendication 8 ou 9,
**caractérisé en ce que**
à l'aide d'un dispositif de libération (36), la base (22) est déformée en une configuration de libération pour le retrait de l'objet (10).
